# EUROPEAN PATENT APPLICATION

(11) **EP 4 772 936 A1**
(43) Date of publication of application: **08.07.2026**
(21) Application number: 24859156.2
(22) Date of filing: 03.07.2024
(51) Int. Cl.: G02F 1/1343, G02F 1/13, G02F 1/1334, G02F 1/137

(54) **LIGHT MODULATING SHEET AND METHOD FOR MANUFACTURING LIGHT MODULATING SHEET**

(30) Priority: 29.08.2023 JP 2023139054
(71) Applicant: Toppan Holdings Inc., Tokyo 110-0016 (JP)
(72) Inventor: HOSHINO, Tatsuya, Tokyo 110-0016 (JP); NAKAMURA, Gen, Tokyo 110-0016 (JP); SHONO, Takuma, Tokyo 110-0016 (JP); YASUHARA, Toshiji, Tokyo 110-0016 (JP)
(74) Representative: TBK
(86) International application number: PCT/JP2024/024074
(87) International publication number: WO 2025/047111

(57) **Abstract**

A light control sheet includes a light control layer that contains a liquid crystal compound and a dichroic dye, and a first transparent electrode layer and a second transparent electrode layer that are a pair of transparent electrode layers sandwiching the light control layer. As viewed perpendicular to a surface of the light control sheet, the first transparent electrode layer includes a non-conductive portion extending linearly and a conductive portion divided by the non-conductive portion, and a portion of the second transparent electrode layer that is conductive overlaps with each of the conductive portion and the non-conductive portion. An average transmittance for light in an infrared range of the light control sheet in an opaque state is 64% or less.

## Description

### [Technical Field]

The present disclosure relates to a light control sheet, and a method of producing the light control sheet.

### [Background Art]

A light control sheet includes a light control layer containing a liquid crystal composition, and a pair of transparent electrode layers sandwiching the light control layer. Each of the transparent electrode layers is supported by a transparent support layer on the side facing away from the light control layer. The alignment state of the liquid crystal composition is changed depending on whether a voltage is applied to the transparent electrode layers; thus, the light control sheet is switchable between a transparent state in which light is transmitted through the light control layer and an opaque state in which light is prevented from being transmitted through the light control layer by scattering or the like.

A structure is proposed in which a light control sheet is divided into a plurality of regions and is switchable between a transparent state and an opaque state for each of the regions, in order to achieve higher designability and expanded functions (see, for example, Patent Literature 1). A light control sheet is divided into a plurality of regions by partially insulating transparent electrode layers, for example, by cutting using a cutting device or laser irradiation.

### [Citation List]

### [Patent Literature]

[PTL 1] JP 2018-60128 A

### [Summary of the Invention]

### [Technical Problem]

When the light control sheet is divided into a plurality of regions using a cutting device, transparent support layers located on the surfaces of the light control sheet are also cut together with the transparent electrode layers. Thus, the surfaces of the light control sheet after cutting need to be protected, and a rough surface after cutting may lead to a poor appearance of the light control sheet.

On the other hand, when the light control sheet is divided into a plurality of regions by laser irradiation, a laser beam is transmitted through the transparent support layers, avoiding cutting the surfaces of the light control sheet. However, a laser beam is also transmitted through the light control layer, insulating both the pair of transparent electrode layers. Thus, for each of the regions obtained by division, wires for voltage application need to be connected to the respective transparent electrode layers sandwiching the light control layer. Therefore, the number of wires increases, which inevitably complicates production of the light-controlling sheet and the control of voltage application.

### [Solution to Problem]

An aspect of a light control sheet includes: a light control layer that includes a transparent polymer layer including a plurality of domains, and a liquid crystal composition with which the domains are filled and that contains a liquid crystal compound and a dichroic dye; and a first transparent electrode layer and a second transparent electrode layer that are a pair of transparent electrode layers sandwiching the light control layer, in which the light control sheet is switched from a colored opaque state to a transparent state by changing an alignment of the liquid crystal compound and the dichroic dye according to a change in a potential difference between the pair of transparent electrode layers, as viewed perpendicular to a surface of the light control sheet, the first transparent electrode layer includes a non-conductive portion extending linearly and a conductive portion divided by the non-conductive portion, and a portion of the second transparent electrode layer that is conductive overlaps with each of the conductive portion and the non-conductive portion, and an average transmittance for light in an infrared range of the light control sheet in the opaque state is 64% or less.

An aspect of a method of producing a light control sheet includes: forming a laminate sheet including a light control layer including a transparent polymer layer that includes a plurality of domains and a liquid crystal composition with which the domains are filled and that contains a liquid crystal compound and a dichroic dye, and a first transparent electrode layer and a second transparent electrode layer that are a pair of transparent electrode layers sandwiching the light control layer; and irradiating the laminate sheet with an infrared laser beam from a side of the light control layer on which the first transparent electrode layer is located, to form a non-conductive portion having a linear shape and a conductive portion divided by the non-conductive portion in the first transparent electrode layer, in which an average transmittance for light in an infrared range of the laminate sheet is 64% or less.

### [Brief Description of the Drawings]

Fig. 1 is a diagram showing a cross-sectional structure of a light control sheet of an embodiment.
Fig. 2 is a diagram showing a planar structure of the light control sheet of the embodiment.
Fig. 3 is an enlarged view of part of the cross-sectional structure of the light control sheet of the embodiment.
Fig. 4 is a diagram showing a structure of a light control layer of the light control sheet of the embodiment.
Fig. 5 is a diagram showing a method of producing the light control sheet of the embodiment.

### [Description of the Embodiments]

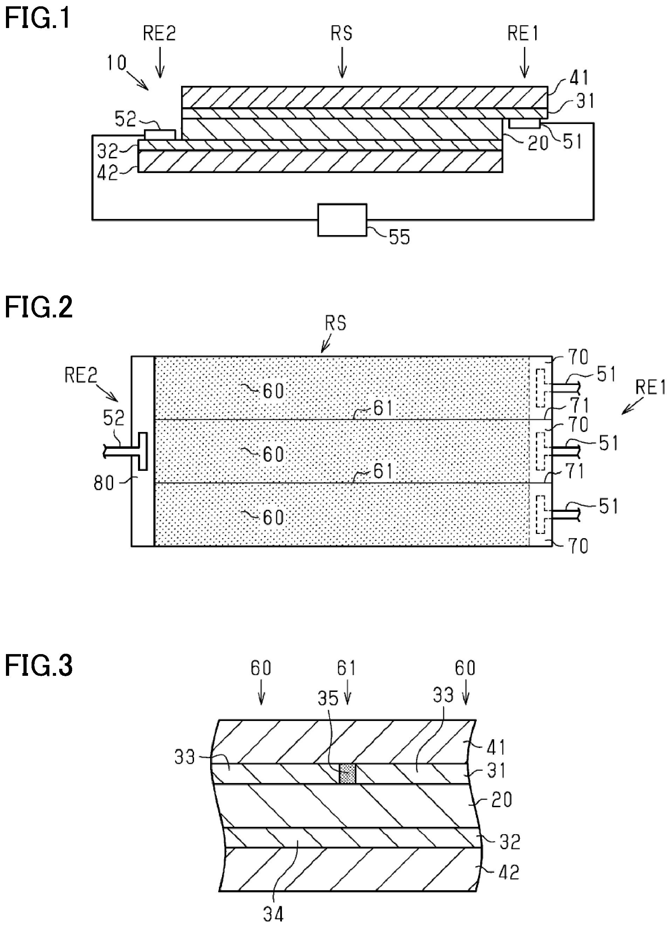

An embodiment of a light control sheet and a method of producing the light control sheet will be described with reference to Figs. 1 to 5.

### [Layer configuration of light control sheet]

A layer configuration of the light control sheet will be described with reference to Fig. 1. As shown in Fig. 1, a light control sheet 10 includes a light control layer 20, a first transparent electrode layer 31, a second transparent electrode layer 32, a first transparent support layer 41, and a second transparent support layer 42. The light control layer 20 is sandwiched between the first transparent electrode layer 31 and the second transparent electrode layer 32, and is in contact with the transparent electrode layers 31 and 32. The first transparent support layer 41 supports the first transparent electrode layer 31 on the side of the first transparent electrode layer 31 facing away from the light control layer 20, and the second transparent support layer 42 supports the second transparent electrode layer 32 on the side of the second transparent electrode layer 32 facing away from the light control layer 20.

The light control layer 20 includes a transparent polymer layer having a plurality of voids, and a liquid crystal composition held in the voids. The light control layer 20 may have, for example, a polymer dispersed liquid crystal structure or a polymer network liquid crystal structure.

Each of the first transparent electrode layer 31 and the second transparent electrode layer 32 is conductive and transparent to light in the visible range. The material of the transparent electrode layers 31 and 32 may be, for example, indium tin oxide, fluorine-doped tin oxide, tin oxide, zinc oxide, carbon nanotubes, poly(3,4-ethylenedioxythiophene), silver, a silver alloy, or the like.

Each of the first transparent support layer 41 and the second transparent support layer 42 is a substrate transparent to light in the visible range. The material of the transparent support layers 41 and 42 may be, for example, a synthetic resin or an inorganic compound. The synthetic resin may be, for example, a polyester such as polyethylene terephthalate or polyethylene naphthalate, a polyacrylate such as polymethyl methacrylate, a polycarbonate, a polyolefin, or the like. The inorganic compound may be, for example, silicon dioxide, silicon oxynitride, silicon nitride, or the like.

The light control sheet 10 has a sheet region RS, a first end region RE1, and a second end region RE2. In the sheet region RS, the light control layer 20 and the layers sandwiching the light control layer 20 are located. In other words, the sheet region RS has a structure in which the light control layer 20 is sandwiched between the pair of transparent electrode layers 31 and 32.

The first end region RE1 and the second end region RE2 are located at end portions of the light control sheet 10. In the first end region RE1, the first transparent support layer 41 and the first transparent electrode layer 31 extend from the sheet region RS. That is, in the first end region RE1, the first transparent electrode layer 31 is exposed from the light control layer 20 and from the second transparent electrode layer 32 and the second transparent support layer 42. First wiring portions 51 for electrically connecting the first transparent electrode layer 31 to a power supply are connected to the surface of the exposed first transparent electrode layer 31.

In the second end region RE2, the second transparent support layer 42 and the second transparent electrode layer 32 extend from the sheet region RS. That is, in the second end region RE2, the second transparent electrode layer 32 is exposed from the light control layer 20 and from the first transparent electrode layer 31 and the first transparent support layer 41. A second wiring portion 52 for electrically connecting the second transparent electrode layer 32 to a power supply is connected to the surface of the exposed second transparent electrode layer 32.

Each of the first wiring portions 51 and the second wiring portion 52 includes, for example, a conductive adhesive layer and a circuit board. The conductive adhesive layer may be, for example, composed of an anisotropic conductive film (ACF), an anisotropic conductive paste (ACP), an isotropic conductive film (ICF), an isotropic conductive paste (ICP), or the like. The circuit board may be, for example, a flexible printed circuit (FPC). Alternatively, each of the first wiring portions 51 and the second wiring portion 52 may have a structure in which a conductive material such as a conductive tape is joined with a conducting wire by soldering.

The transparent electrode layers 31 and 32 are electrically connected to a control unit 55 via the wiring portions 51 and 52. The control unit 55 applies a driving voltage as an AC voltage for changing the alignment state of a liquid crystal compound to the transparent electrode layers 31 and 32 through the wiring portions 51 and 52. The light control sheet 10, the control unit 55, and the wiring portions 51 and 52 constitute a light control device.

The light control sheet 10 is bonded to a transparent substrate that is an attachment object. The transparent substrate is a glass substrate or a resin substrate. Examples of the transparent substrate include a window glass mounted on a moving object such as a vehicle or an aircraft, a window glass installed in a building, and a partition placed in a vehicle or indoors. The light control sheet 10 is bonded to a plane or curved surface. The light control sheet 10 may be sandwiched between two transparent substrates.

### [Planar configuration of light control sheet]

The arrangement of the regions RS, RE1, and RE2 and the wiring portions 51 and 52 in the light control sheet 10 will be described with reference to Figs. 2 and 3. In Fig. 2, the sheet region RS is indicated by dots for ease of understanding.

As shown in Fig. 2, the sheet region RS has a plurality of light control units 60 and one or more insulating portions 61. As viewed perpendicular to the surface of the light control sheet 10, the one or more insulating portions 61 extend linearly, and each of the one or more insulating portions 61 divides adjacent light control units 60. In other words, the sheet region RS is divided into the plurality of light control units 60 by the one or more insulating portions 61.

Fig. 2 shows an example in which the light control units 60 and the one or more insulating portions 61 extend in a single direction, and three light control units 60 extending in a strip shape are divided by two insulating portions 61. The number and shape of the light control units 60 and the one or more insulating portions 61 are not limited to this and are arbitrary, as long as the light control units 60 are divided by the one or more insulating portions 61 having a linear shape.

Fig. 3 shows a cross-sectional structure in the vicinity of one of the insulating portions 61. The first transparent electrode layer 31 includes a conductive portion 33 and a non-conductive portion 35. The non-conductive portion 35 is a portion of the first transparent electrode layer 31 in which conductivity is lost due to destruction or modification by laser irradiation. In other words, the non-conductive portion 35 is a laser processing mark, and extends linearly as viewed perpendicular to the surface of the light control sheet 10. The conductive portion 33 is a portion of the first transparent electrode layer 31 that has not been subjected to laser irradiation and is conductive.

On the other hand, the second transparent electrode layer 32 does not include a non-conductive portion. In other words, the entire second transparent electrode layer 32 serves as a conductive portion 34.

In the sheet region RS, as viewed perpendicular to the surface of the light control sheet 10, the conductive portion 33 is located in the light control units 60, and the non-conductive portion 35 is located in the insulating portions 61. That is, in the light control units 60, both the first transparent electrode layer 31 and the second transparent electrode layer 32 are conductive, and in the insulating portions 61, the first transparent electrode layer 31 is not conductive and the second transparent electrode layer 32 is conductive. Portions of the conductive portion 33 of the first transparent electrode layer 31 in adjacent light control units 60 are insulated from each other by the non-conductive portion 35 located as an insulating portion 61 between the portions.

Returning to Fig. 2, the first end region RE1 has first connection portions 70 and one or more end insulating portions 71. The first connection portions 70 extend continuously from the light control units 60 in the sheet region RS. In the first connection portions 70, the conductive portion 33 of the first transparent electrode layer 31 is located. The end insulating portions 71 extend continuously and linearly from the insulating portions 61 in the sheet region RS. In the end insulating portions 71, the non-conductive portion 35 of the first transparent electrode layer 31 is located. Portions of the conductive portion 33 of the first transparent electrode layer 31 in adjacent first connection portions 70 are insulated from each other by the non-conductive portion 35 located as an end insulating portion 71 between the portions.

Thus, the first connection portions 70 are electrically connected to the respective light control units 60 in the first transparent electrode layer 31, and adjacent first connection portions 70 are divided by one of the end insulating portions 71. The first wiring portions 51 are connected to portions of the first transparent electrode layer 31 in the respective first connection portions 70.

The second end region RE2 has no insulating portion. That is, the entire second transparent electrode layer 32 included in the sheet region RS and the second end region RE2 is a uniform conductive film. The second end region RE2 has a second connection portion 80. The second wiring portion 52 is connected to the second transparent electrode layer 32 in the second connection portion 80. Thus, the single second wiring portion 52 is connected to the second end region RE2.

In Fig. 2, the first end region RE1 and the second end region RE2 are arranged along the sides of the light control sheet 10 facing each other; however, the positional relationship between the first end region RE1 and the second end region RE2 may be arbitrarily set. In other words, the first connection portions 70 and the second connection portion 80 may be arranged along the sides of the light control sheet 10 facing each other, or may be arranged in a manner different from such arrangement.

### [Configuration of light control layer]

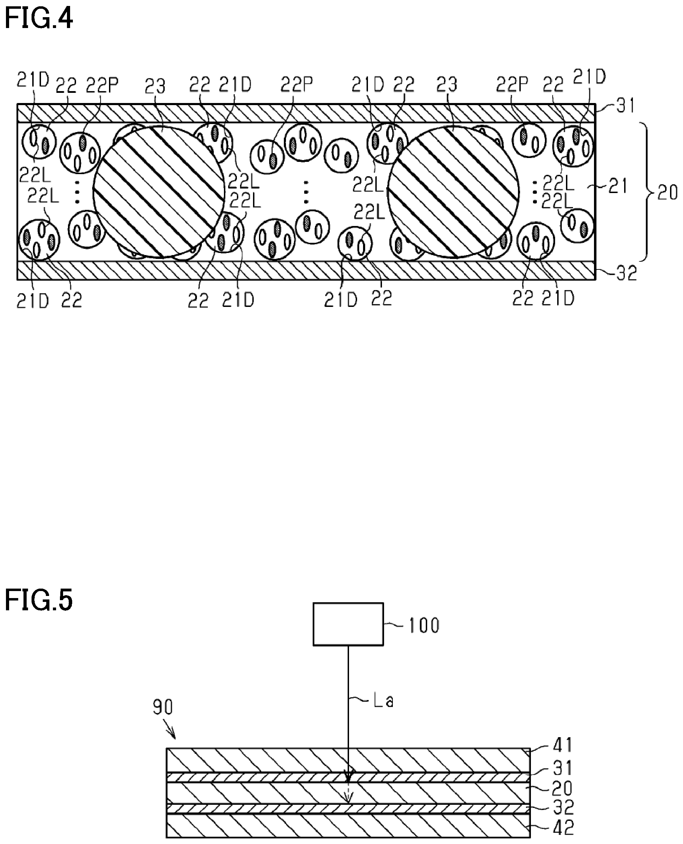

A detailed configuration of the light control layer 20 will be described with reference to Fig. 4. Fig. 4 is a schematic diagram showing a portion of the cross-sectional structure of the light control sheet 10 in which the light control layer 20 and the transparent electrode layers 31 and 32 are laminated and emphasizing the configuration of the light control layer 20.

The light control layer 20 includes a transparent polymer layer 21, a liquid crystal composition 22, and spacers 23. The transparent polymer layer 21 is a cured product of a photopolymerizable compound. In the transparent polymer layer 21, a plurality of domains 21D are dispersed. The domains 21D are, in other words, voids. The domains 21D have, for example, a substantially spherical shape, a substantially ellipsoidal shape, or an irregular shape. The space in the domains 21D is filled with the liquid crystal composition 22.

The ratio of the transparent polymer layer 21 in the light control layer 20 is preferably 20 mass% or more and 80 mass% or less, and more preferably 30 mass% or more and 60 mass% or less. When the ratio of the transparent polymer layer 21 is in the above range, the domains 21D are appropriately secured. In the above range, a higher ratio of the transparent polymer layer 21 leads to higher mechanical strength of the transparent polymer layer 21, and a lower ratio of the transparent polymer layer 21 leads to a lower driving voltage of the light control sheet 10.

The photopolymerizable compound used as a material of the transparent polymer layer 21 may be an ultraviolet curable compound or an electron beam curable compound. The photopolymerizable compound is compatible with the liquid crystal composition 22. When the photopolymerizable compound is an ultraviolet curable compound, it is possible to obtain higher controllability of the dimension of the domains 21D. The photopolymerizable compound may be one type of polymerizable compound, or a combination of two or more types of polymerizable compounds.

An example of the ultraviolet curable compound has a polymerizable unsaturated bond at an end of the molecular structure. Another example of the ultraviolet curable compound has a polymerizable unsaturated bond at a portion other than the end of the molecular structure. The ultraviolet curable compound may be, for example, an acrylate compound, a methacrylate compound, a thiol compound, a styrene compound, or an oligomer thereof. The acrylate compound may be a diacrylate compound, a triacrylate compound, or a tetraacrylate compound. Examples of the acrylate compound include butyl ethyl acrylate, ethylhexyl acrylate, and cyclohexyl acrylate. The methacrylate compound may be a dimethacrylate compound, a trimethacrylate compound, or a tetramethacrylate compound. Examples of the methacrylate compound include N,N-dimethylaminoethyl methacrylate, phenoxyethyl methacrylate, methoxyethyl methacrylate, and tetrahydrofurfuryl methacrylate. Examples of the thiol compound include 1,3-propanedithiol and 1,6-hexanedithiol. Examples of the styrene compound include styrene and methylstyrene.

The liquid crystal composition 22 contains a liquid crystal compound 22L and a dichroic dye 22P. The liquid crystal composition 22 may further contain a viscosity reducer, an antifoaming agent, an antioxidant, an anti-weathering agent, and the like. Examples of the anti-weathering agent include an ultraviolet absorber and a photostabilizer.

The liquid crystal compound 22L is a non-polymerizable compound. The liquid crystal compound 22L has a higher dielectric constant in the major axis direction than in the minor axis direction. That is, the liquid crystal compound 22L has positive dielectric anisotropy.

The liquid crystal compound 22L may be, for example, a Schiff base compound, an azo compound, an azoxy compound, a biphenyl compound, a terphenyl compound, a benzoic acid ester compound, a tolan compound, a pyrimidine compound, a pyridazine compound, a cyclohexanecarboxylic acid ester compound, a phenylcyclohexane compound, a biphenylcyclohexane compound, a dicyanobenzene compound, a naphthalene compound, or a dioxane compound. The liquid crystal compound 22L may be one type of liquid crystal compound or a combination of two or more types of liquid crystal compounds.

Molecules of the dichroic dye 22P have an elongated shape, and the absorbance in the visible range is higher in the major axis direction of the molecules than in the minor axis direction of the molecules. The dichroic dye 22P exhibits a predetermined color while the major axis direction is substantially perpendicular to the light incident direction. The dichroic dye 22P exhibits, for example, black or a color close to black. The dichroic dye 22P exhibits a color by being driven by a guest-host type in which the liquid crystal compound 22L serves as a host.

Furthermore, the dichroic dye 22P has absorption properties for light in the infrared range. Light in the infrared range is light in the wavelength range of 780 nm or more and 2000 nm or less.

The dichroic dye 22P may be, for example, polyiodine, an azo compound, an anthraquinone compound, a naphthoquinone compound, an azomethine compound, a tetrazine compound, a quinophthalone compound, a merocyanine compound, a perylene compound, or a dioxazine compound. The dichroic dye 22P may be one type of dye or a combination of two or more types of dyes. From the viewpoint of obtaining higher light resistance and dichroic ratio, the dichroic dye 22P is preferably at least one selected from the group consisting of an azo compound and an anthraquinone compound, and more preferably an azo compound.

The ratio of the dichroic dye 22P in the light control layer 20 is preferably 1 mass% or more and 10 mass% or less, and more preferably 2 mass% or more and 5 mass% or less. When the ratio of the dichroic dye 22P is 1 mass% or more, a color difference between the light control sheet 10 in a transparent state and the light control sheet 10 in an opaque state is more likely to be clearly recognized. Furthermore, the light control layer 20 is more likely to have sufficient absorption properties for light in the infrared range. When the ratio of the dichroic dye 22P is 10 mass% or less, it is possible to prevent precipitation of aggregated particles of the dichroic dye 22P.

The spacers 23 are dispersed throughout the transparent polymer layer 21. The spacers 23 define the thickness of the light control layer 20 around the spacers 23 to allow the light control layer 20 to have a uniform thickness. The spacers 23 may be bead spacers, or photospacers formed by exposure and development of a photoresist. The spacers 23 may be colorless and transparent, or colored and transparent, as long as the spacers 23 are translucent. The spacers 23 that are colored and transparent preferably exhibit the same color as the color exhibited by the dichroic dye 22P.

The thickness of the light control layer 20 approximately coincides with the size of the spacers 23; thus, the thickness of the light control layer 20 can be controlled by changing the average particle size of the spacers 23. The average particle size of the spacers 23 is, for example, a median diameter D50 of 10 µm or more and 30 µm or less. In that case, the light control layer 20 has a thickness of 10 µm or more and 30 µm or less.

### [Electrical configuration of light control device]

Voltage signals input from the control unit 55 to the respective first wiring portions 51 are input to portions of the first transparent electrode layer 31 in the light control units 60 electrically connected to the first connection portions 70 connected to the respective first wiring portions 51. That is, separate voltage signals are input to portions of the first transparent electrode layer 31 in the respective light control units 60.

On the other hand, a voltage signal input from the control unit 55 to the second wiring portion 52 is input to the second transparent electrode layer 32. That is, a common voltage signal is input to portions of the second transparent electrode layer 32 in the respective light control units 60.

In the above configuration, the control unit 55 can control the application of a driving voltage to the light control units 60 for each of the light control units 60 by controlling the input of a voltage signal to the first transparent electrode layer 31 for each of the light control units 60 while a common voltage signal is input to the portions of the second transparent electrode layer 32 in the respective light control units 60.

The light control units 60 are switched from one to the other of the transparent state and the opaque state based on a change in the alignment state of the liquid crystal composition 22. In the opaque state, the light control sheet 10 is colored, and in the transparent state, the light control sheet 10 is colorless, or transparent and close to colorless. In the opaque state, the light control sheet 10 has a lower total light transmittance and a higher haze value than in the transparent state.

When no driving voltage is applied, the major axes of the liquid crystal compound 22L and the dichroic dye 22P are randomly oriented. Therefore, light incident on the light control units 60 is scattered in various directions in the light control layer 20. The major axes of the dichroic dye 22P are randomly oriented; thus, at least part of the dichroic dye 22P exhibits a color. Therefore, when no driving voltage is applied, the light control units 60 are in the opaque state and appear to be colored.

In the case where the liquid crystal compound 22L has positive dielectric anisotropy, when a driving voltage is applied, the liquid crystal compound 22L and the dichroic dye 22P are aligned so that the major axes of the liquid crystal compound 22L and the dichroic dye 22P are oriented in the electric field direction. That is, the alignment of the liquid crystal compound 22L and the dichroic dye 22P is changed so that the major axes of the liquid crystal compound 22L and the dichroic dye 22P are oriented in the thickness direction of the light control layer 20. Thus, it is possible to prevent scattering of light in the light control layer 20 and prevent the dichroic dye 22P from exhibiting a color, and light is more likely to be transmitted through the light control units 60. Therefore, when a driving voltage is applied, the light control units 60 are in the transparent state.

### [Properties of light control sheet]

Optical properties of the light control sheet 10 will be described. The light control sheet 10 of the present embodiment contains the dichroic dye 22P that absorbs light in the infrared range. Thus, the light control sheet 10 in the opaque state has absorption properties for light in the infrared range. In other words, the light control sheet 10 in the opaque state has low transmission properties for light in the infrared range. Specifically, the average transmittance for light in the infrared range of the light control sheet 10 in the opaque state is 64% or less.

The average infrared transmittance can be adjusted by changing the type or ratio of dichroic dye 22P contained in the light control layer 20. For example, when a plurality of types of dichroic dyes 22P are mixed and used to form the light control sheet 10 that exhibits black in the opaque state, it is possible to allow the light control sheet 10 to have a lower average infrared transmittance by using a higher ratio of dichroic dye 22P having high absorption properties for light with a long wavelength in the visible range.

In the light control sheet 10 in the opaque state, the total light transmittance for light in the visible range is preferably 20% or less, and more preferably 5% or less. On the other hand, in the light control sheet 10 in the transparent state, the total light transmittance for light in the visible range is preferably 40% or more, and more preferably 50% or more. In that case, the degree of transparency is clearly different between the light control sheet 10 in the transparent state and the light control sheet 10 in the opaque state.

### [Method of producing light control sheet]

A method of producing the light control sheet 10 will be described with reference to Fig. 5.

First, a laminate that includes the light control layer 20, the transparent electrode layers 31 and 32, and the transparent support layers 41 and 42 is formed. At this time, the first transparent electrode layer 31 is a uniform conductive film in which the non-conductive portion 35 is not formed.

Specifically, first, the first transparent support layer 41 on which the first transparent electrode layer 31 is laminated, and the second transparent support layer 42 on which the second transparent electrode layer 32 is laminated are prepared. The transparent electrode layers 31 and 32 are formed, for example, by a known film formation method such as sputtering.

Subsequently, a coating film for forming the light control layer 20 is formed between the first transparent electrode layer 31 and the second transparent electrode layer 32. The coating film contains a photopolymerizable compound, the liquid crystal compound 22L, the dichroic dye 22P, and a polymerization initiator for starting polymerization of the photopolymerizable compound. The polymerization initiator may be, for example, a diketone compound, an acetophenone compound, a benzoin compound, a benzophenone compound, a thioxanthone compound, an oxime ester compound, or the like. The coating film may contain only a single type of polymerization initiator or a plurality of types of polymerization initiators.

The spacers 23 may be contained in a coating liquid for forming the coating film, or may be dispersed in the coating film during formation of the coating film.

The laminate in which the coating film is sandwiched is irradiated with light to polymerize the photopolymerizable compound and cause phase separation of the liquid crystal composition 22, and thus the light control layer 20 is formed. The light used to polymerize the photopolymerizable compound is ultraviolet light or an electron beam. The light used to polymerize the photopolymerizable compound may be emitted toward the first transparent support layer 41, toward the second transparent support layer 42, or toward both the first transparent support layer 41 and the second transparent support layer 42.

From the laminate obtained as described above, a laminate sheet 90 that includes the light control layer 20, the transparent electrode layers 31 and 32, and the transparent support layers 41 and 42 and has the desired shape of the light control sheet 10 is prepared by cutting. In the laminate sheet 90, the liquid crystal compound 22L and the dichroic dye 22P contained in the light control layer 20 are randomly oriented, and the laminate sheet 90 is opaque. The average infrared transmittance of the laminate sheet 90 is 64% or less, as with the light control sheet 10 in the opaque state.

As shown in Fig. 5, the laminate sheet 90 is irradiated with a laser beam La. Specifically, a laser irradiation unit 100 of a laser device is disposed facing the first transparent support layer 41, and regions in the laminate sheet 90 to be the one or more insulating portions 61 and the one or more insulating portions 71 are irradiated with the laser beam La from the side of the light control layer 20 on which the first transparent electrode layer 31 is located.

The laser beam has a wavelength in the infrared range. For example, the laser beam preferably has a wavelength of 1000 nm or more and 1200 nm or less. The laser medium is not particularly limited. For example, a Nd:YAG laser, a Nd:YVO₄ laser, a CO₂ laser, a semiconductor laser, or the like may be used.

The laser beam La with which the laminate sheet 90 is irradiated is transmitted through the first transparent support layer 41 and enters the first transparent electrode layer 31. Thus, a portion of the first transparent electrode layer 31 is destroyed or modified and loses conductivity, and the non-conductive portion 35 is formed.

Furthermore, part of the laser beam La entering the first transparent electrode layer 31 enters the light control layer 20. The light control layer 20 has absorption properties for light in the infrared range due to the dichroic dye 22P contained in the light control layer 20. Thus, the laser beam La entering the light control layer 20 is absorbed by the light control layer 20. Therefore, it is possible to prevent the laser beam La from being transmitted through the light control layer 20 and entering the second transparent electrode layer 32. As a result, it is possible to prevent formation of a non-conductive portion in the second transparent electrode layer 32 and suitably form the insulating portions 61 in which conductivity is lost only in the first transparent electrode layer 31.

In general, the absorption spectrum of light in the infrared range derived from the dichroic dye 22P does not have a sharp peak only at a specific wavelength in the infrared range, and when the average infrared transmittance of the laminate sheet 90 is low, the transmittance in the entire infrared range is low. When the average infrared transmittance of the laminate sheet 90 is 64% or less, it is possible to suitably prevent the laser beam La having a wavelength in the infrared range from reaching the second transparent electrode layer 32 to cause the second transparent electrode layer 32 to be processed.

Furthermore, when the average infrared transmittance of the laminate sheet 90 is 60% or less, it is possible to more suitably prevent the laser beam La from being transmitted through the light control layer 20 and entering the second transparent electrode layer 32.

The absorption of light in the infrared range derived from the dichroic dye 22P is high in the vicinity of a wavelength of 1000 nm to 1500 nm; thus, by using the laser beam La having a wavelength of 1000 nm or more and 1200 nm or less, it is possible to more appropriately prevent the laser beam La from being transmitted through the light control layer 20 and entering the second transparent electrode layer 32.

After irradiation with the laser beam La, portions of the light control layer 20, the second transparent electrode layer 32, and the second transparent support layer 42 in the vicinity of an end portion of the laminate sheet 90 are removed to form the first end region RE1. Furthermore, portions of the light control layer 20, the first transparent electrode layer 31, and the first transparent support layer 41 in the vicinity of another end portion of the laminate sheet 90 are removed to form the second end region RE2. When the first end region RE1 and the second end region RE2 are formed, the sheet region RS is formed.

Thus, the light control sheet 10 is formed. Then, the first wiring portions 51 are connected to the respective first connection portions 70 in the first end region RE1, and the second wiring portion 52 is connected to the second connection portion 80 in the second end region RE2.

In the production method, a laser beam is absorbed by the light control layer 20, and thus it is possible to easily form the non-conductive portion 35 only in the first transparent electrode layers 31. Thus, in the light control sheet 10, a voltage signal can be input from the single second wiring portion 52 to the entire second transparent electrode layer 32. Therefore, it is possible to prevent the arrangement of wiring portions and the control of a voltage signal input from being complicated, as compared with the case where both the first transparent electrode layer 31 and the second transparent electrode layer 32 are insulated and wiring portions are provided in the transparent electrode layers 31 and 32 for each of the light control units 60, that is, the case where separate voltage signals are input to the portions of the second transparent electrode layer 32 in the respective light control units 60.

Even if a laser beam is not absorbed by the light control layer 20, it is not impossible to form a non-conductive portion in only one of the transparent electrode layers by controlling laser irradiation conditions; however, in that case, conditions such as laser focusing, output, and scanning speed need to be precisely controlled. On the other hand, in the present embodiment, a laser beam is absorbed by the light control layer 20, requiring less precise control of the laser beam irradiation conditions, thus placing less burden of production of the light control sheet 10.

### [Examples]

The light control sheet will be described by way of specific examples and comparative examples.

### (Example 1)

A liquid crystal compound, a dichroic dye, a photopolymerizable compound, and a polymerization initiator were mixed to prepare a coating liquid for forming a light control layer. Details of the materials were as follows. As for the ratio of materials in the coating liquid, the ratio of liquid crystal compound was 51 mass%, the ratio of dichroic dye was 4 mass%, the ratio of photopolymerizable compound and polymerization initiator was 44 mass%, and the ratio of spacers was 1 mass%.
· Liquid crystal compound: Cyanobiphenyl compound
· Dichroic dye: Black dichroic dye (YH-428, manufactured by Mitsui Fine Chemicals, Inc.)
· Photopolymerizable compound (ultraviolet curable compound): Mixture of isobornyl acrylate, pentaerythritol triacrylate, and urethane acrylate
· Polymerization initiator: 1-hydroxycyclohexyl phenyl ketone (Irgacure184, manufactured by BASF Japan)
· Spacers: Black spherical particles made of polymethyl methacrylate (particle size: 25 µm)

A first transparent electrode layer was formed on a first transparent support layer by sputtering to prepare a first sheet that was a laminate of the first transparent support layer and the first transparent electrode layer. Similarly, a second transparent electrode layer was formed on a second transparent support layer by sputtering to prepare a second sheet that was a laminate of the second transparent support layer and the second transparent electrode layer. The material of each of the first transparent support layer and the second transparent support layer was polyethylene terephthalate, and the thickness of each of the transparent support layers was 125 µm. The material of each of the first transparent electrode layer and the second transparent electrode layer was indium tin oxide (ITO), and the thickness of each of the transparent electrode layers was 30 nm.

The coating liquid was applied to the first sheet to form a coating film on the first transparent electrode layer. The coating film had a thickness of 25 µm. Then, the second sheet was bonded by lamination to the first sheet on which the coating film was formed, and thus a laminate of the first sheet, the coating film, the second sheet was obtained.

Subsequently, ultraviolet light at 365 nm was emitted toward the first transparent support layer of the laminate to form a light control layer. The intensity of the ultraviolet light was 7.2 mW/cm², and the irradiation time for the ultraviolet light was 120 seconds. Thus, a laminate sheet including the light control layer, the pair of transparent electrode layers, and the transparent support layers was obtained.

The laminate sheet was irradiated with a laser beam from the side of the light control layer on which the first transparent support layer was located, to form a non-conductive portion in the first transparent electrode layer. Laser irradiation conditions were as follows.
· Type: IR semiconductor laser
· Wavelength: 1064 nm
· Spot diameter: 30 µm
Thus, a light control sheet of Example 1 including a plurality of light control units into which the light control sheet was divided by an insulating portion was obtained.

### (Example 2)

In Example 2, a light control sheet was obtained using the same materials and process as in Example 1, except that the ratios of materials in the coating liquid for forming a light control layer were changed to 52 mass% of liquid crystal compound, 3 mass% of dichroic dye, 44 mass% of photopolymerizable compound and polymerization initiator, and 1 mass% of spacers.

### (Example 3)

In Example 3, a light control sheet was obtained using the same materials and process as in Example 1, except that the ratios of materials in the coating liquid for forming a light control layer were changed to 52 mass% of liquid crystal compound, 3 mass% of dichroic dye, 44 mass% of photopolymerizable compound and polymerization initiator, and 1 mass% of spacers and that the material of the first transparent electrode layer and the second transparent electrode layer was changed to a silver alloy.

### (Comparative Example 1)

In Comparative Example 1, a light control sheet was obtained using the same materials and process as in Example 1, except that the ratios of materials in the coating liquid for forming a light control layer were changed to 52 mass% of liquid crystal compound, 0 mass% of dichroic dye, 47 mass% of photopolymerizable compound and polymerization initiator, and 1 mass% of spacers and that the particle size of the spacers was changed so that the thickness of the light control layer was 22 µm. That is, the light control sheet of Comparative Example 1 contained no dichroic dye.

### (Comparative Example 2)

In Comparative Example 2, a light control sheet was obtained using the same materials and process as in Example 1, except that the ratios of materials in the coating liquid for forming a light control layer were changed to 48 mass% of liquid crystal compound, 1.5 mass% of dichroic dye, 49.5 mass% of photopolymerizable compound and polymerization initiator, and 1 mass% of spacers.

### (Evaluation)

In the light control sheets of the examples and the comparative examples, the average infrared transmittance of the light control sheets in the opaque state and the total light transmittance for light in the visible range of the light control sheets in each of the opaque state and the transparent state were measured. The average infrared transmittance was the average transmittance for light having a wavelength of 780 nm or more and 2000 nm or less, and was measured using an infrared spectrometer. The total light transmittance was measured in accordance with JIS K 7361-1. The opaque state was a state in which the applied voltage was 0 V, and the transparent state was a state in which the applied voltage was 60 V.

In the laser irradiation step during production of the light control sheets of the examples and the comparative examples, processing evaluation was performed by checking whether a non-conductive portion was formed only in the first transparent electrode layer out of the first transparent electrode layer and the second transparent electrode layer and checking the laser scanning speed range that allowed formation of a non-conductive portion only in the first transparent electrode layer. In the processing evaluation, a light control sheet was determined to be very good (A) when a non-conductive portion was formed only in the first transparent electrode layer and the laser scanning speed range that allowed the processing was wide, a light control sheet was determined to be good (B) when a non-conductive portion was formed only in the first transparent electrode layer and the laser scanning speed range that allowed the processing was narrow, and a light control sheet was determined to be poor (C) when the formation of a non-conductive portion only in the first transparent electrode layer failed. When a light control sheet was evaluated as very good (A), the laser scanning speed range was 3000 mm/s to 4500 mm/s, and when a light control sheet was evaluated as good (B), the laser scanning speed range was 3000 mm/s.

Table 1 shows the composition of the light control layer, the thickness of the light control layer, and the material of the transparent electrode layer in the examples and the comparative examples. Table 2 shows the average infrared transmittance, the total light transmittance, and the processing evaluation results in the examples and the comparative examples.

**[Table 1]**

| | Composition of light control layer | | | | Thickness of light control layer (µm) | Material of transparent electrode layer |
|---|---|---|---|---|---|---|
| | Liquid crystal compound | Dichroic dye | Resin component | Spacers | | |
| Example 1 | 51% | 4% | 44% | 1% | 25 | ITO |
| Example 2 | 52% | 3% | 44% | 1% | 25 | ITO |
| Example 3 | 52% | 3% | 44% | 1% | 25 | Ag alloy |
| Comparative Example 1 | 52% | 0% | 47% | 1% | 22 | ITO |
| Comparative Example 2 | 48% | 1.5% | 49.5% | 1% | 25 | ITO |

**[Table 2]**

| | Average infrared transmittance | Total light transmittance | | Processing evaluation |
|---|---|---|---|---|
| | | Opaque state | Transparent state | |
| Example 1 | 58.5% | 4.8% | 44.1% | A |
| Example 2 | 64.0% | 16.4% | 59.8% | B |
| Example 3 | 18.2% | 4.9% | 40.4% | A |
| Comparative Example 1 | 65.4% | 79.1% | 87.2% | C |
| Comparative Example 2 | 66.1% | 18.0% | 40.0% | C |

As shown in Tables 1 and 2, in Example 1 to 3 in which the average infrared transmittance of the light control sheets in the opaque state was 64% or less, the processing evaluation results were good or very good, and a non-conductive portion was formed only in the first transparent electrode layer. Furthermore, it was confirmed that when the average infrared transmittance was 60% or less, the processing evaluation results were very good, and the laser scanning speed range that allowed the processing was wide.

On the other hand, in Comparative Examples 1 and 2 in which the average infrared transmittance exceeded 64%, the processing evaluation results were poor, and the formation of a non-conductive portion only in the first transparent electrode layer failed. It was confirmed that even in the light control sheet in which the light control layer contained a dichroic dye as in Comparative Example 2, when the average infrared transmittance exceeded 64%, the formation of a non-conductive portion only in the first transparent electrode layer failed. It is suggested that the light control layer preferably contains 3 mass% or more of dichroic dye, in order to obtain an average infrared transmittance of 64% or less.

As described in the embodiments and the examples, the light control sheet achieves the following effects.
(1) The light control layer 20 contains the dichroic dye 22P having absorption properties for light in the infrared range, and the average infrared transmittance of the light control sheet 10 in the opaque state and the laminate sheet 90 is 64% or less. In this configuration, infrared light is absorbed by the light control layer, and this makes it possible to easily form the non-conductive portion 35 in only one of the two transparent electrode layers 31 and 32 using an infrared laser beam. Therefore, it is possible to prevent an increase in the number of wires required to connect the transparent electrode layers 31 and 32 to a power supply and prevent the arrangement of wiring portions and the control of a voltage signal input from being complicated.
(2) When the ratio of the dichroic dye 22P in the light control layer 20 is 1 mass% or more and 10 mass% or less, a color difference between the light control sheet in the transparent state and the light control sheet in the opaque state is more likely to be clearly recognized, and it is possible to prevent precipitation of the dichroic dye and an increase in production cost for the light control sheet. Furthermore, the light control layer 20 is more likely to have sufficient absorption properties for light in the infrared range.
(3) When the color exhibited by the dichroic dye 22P is black, the insulating portions 61 that are laser processing marks are prevented from being conspicuous in the opaque state.
(4) When the ratio of the transparent polymer layer 21 in the light control layer 20 is 20 mass% or more and 80 mass% or less, it is possible to appropriately secure the domains in the transparent polymer layer 21 and suitably form a structure of the light control layer 20 in which the liquid crystal composition 22 is dispersed in the transparent polymer layer 21.
(5) The material of the transparent electrode layers 31 and 32 contains indium tin oxide or a silver alloy. In the light control sheet 10 and the laminate sheet 90 having this configuration, as shown in the examples, it is possible to suitably process only one of the two transparent electrode layers 31 and 32 using an infrared laser beam.
(6) The material of the transparent support layers 41 and 42 contains polyethylene terephthalate. In the light control sheet 10 and the laminate sheet 90 having this configuration, as shown in the examples, it is possible to suitably process only one of the two transparent electrode layers 31 and 32 using an infrared laser beam.

### (Modifications)

The embodiments may be implemented with modifications as follows. The following modifications may be implemented in combination.

· The layer configuration of the light control sheet 10 is not limited to the configuration described in the embodiments, as long as the average infrared transmittance of the light control sheet 10 and the laminate sheet 90 is 64% or less and the light control sheet 10 is configured to be switchable between the transparent state and the opaque state based on a change in the alignment state of the liquid crystal compound by application of a driving voltage.

For example, the light control sheet may include an alignment layer that controls the alignment of the liquid crystal compound. The light control sheet may include a functional layer having a desired function. The light control sheet may include a functional layer laminated on each of the transparent support layers 41 and 42 as an outermost layer of the light control sheet, or may include a functional layer located between layers such as between the transparent electrode layer 31 and the transparent support layer 41 and between the transparent electrode layer 32 and the transparent support layer 42. The functional layer may be, for example, a hard coat layer, an antiblocking layer, a primer layer, a protective layer, an index matching layer, or the like.

## Claims

1. A light control sheet comprising:
a light control layer that includes a transparent polymer layer including a plurality of domains, and a liquid crystal composition with which the domains are filled and that contains a liquid crystal compound and a dichroic dye; and
a first transparent electrode layer and a second transparent electrode layer that are a pair of transparent electrode layers sandwiching the light control layer, wherein
the light control sheet is switched from a colored opaque state to a transparent state by changing an alignment of the liquid crystal compound and the dichroic dye according to a change in a potential difference between the pair of transparent electrode layers,
as viewed perpendicular to a surface of the light control sheet, the first transparent electrode layer includes a non-conductive portion extending linearly and a conductive portion divided by the non-conductive portion, and a portion of the second transparent electrode layer that is conductive overlaps with each of the conductive portion and the non-conductive portion, and
an average transmittance for light in an infrared range of the light control sheet in the opaque state is 64% or less.

2. The light control sheet according to claim 1, wherein
a ratio of the dichroic dye in the light control layer is 1 mass% or more and 10 mass% or less.

3. The light control sheet according to claim 1, wherein
a ratio of the transparent polymer layer in the light control layer is 20 mass% or more and 80 mass% or less.

4. The light control sheet according to claim 1, wherein
a material of each of the first transparent electrode layer and the second transparent electrode layer contains indium tin oxide or a silver alloy.

5. The light control sheet according to claim 1, comprising
a pair of transparent support layers that sandwich the light control layer and the pair of transparent electrode layers, wherein
a material of each of the pair of transparent support layers contains polyethylene terephthalate.

6. A method of producing a light control sheet, the method comprising:
forming a laminate sheet including a light control layer including a transparent polymer layer that includes a plurality of domains and a liquid crystal composition with which the domains are filled and that contains a liquid crystal compound and a dichroic dye, and a first transparent electrode layer and a second transparent electrode layer that are a pair of transparent electrode layers sandwiching the light control layer; and
irradiating the laminate sheet with an infrared laser beam from a side of the light control layer on which the first transparent electrode layer is located, to form a non-conductive portion having a linear shape and a conductive portion divided by the non-conductive portion in the first transparent electrode layer, wherein
an average transmittance for light in an infrared range of the laminate sheet is 64% or less.
